# EUROPÄISCHE PATENTANMELDUNG

(11) **EP 4 418 699 A1**
(43) Veröffentlichungstag der Anmeldung: **21.08.2024**
(21) Anmeldenummer: 23157265.2
(22) Anmeldetag: 17.02.2023
(51) Int. Cl.: H04W 4/40, H04W 4/02, H04L 67/52, H04L 67/30, H04W 4/38, G01C 21/26, G01C 21/34, H04W 8/18, G06Q 50/00

(54) **VERFAHREN, SYSTEM SOWIE COMPUTERPRODUKT IN ZUSAMMENHANG MIT INDIVIDUELLER MOBILITÄT**

(71) Anmelder: Bayerische Motoren Werke Aktiengesellschaft, 80809 München (DE)
(72) Erfinder: Augst, Alexander, 80937 München (DE)

(57) **Zusammenfassung**

Es wird ein Verfahren (200) zum Ausführen einer Funktionalität in Zusammenhang mit einer individuellen Mobilität beschrieben. Das Verfahren (200) umfasst das Ermitteln (201) zumindest einer ersten Position eines Fahrzeugs (100) und das Ermitteln (202) zumindest einer zweiten Position eines Anwendergeräts (120) eines Nutzers (121) des Fahrzeugs (100). Des Weiteren umfasst das Verfahren (200) das Bestimmen und/oder Anpassen (203) einer Funktionalität des Fahrzeugs (100) und/oder des Anwendergeräts (120) in Abhängigkeit von der ersten Position und der zweiten Position.

## Beschreibung

Die Erfindung betrifft ein Verfahren, eine Vorrichtung, insbesondere ein Anwendergerät, ein System sowie ein Computerprodukt in Zusammenhang mit individueller Mobilität.

Es kommt häufig vor, dass der Nutzer eines Fahrzeugs das Fahrzeugs an einer bestimmten Position abstellt, und sich daraufhin von dem Fahrzeug entfernt. Das vorliegende Dokument befasst sich mit der technischen Aufgabe, den Komfort eines Fahrzeugnutzers in Bezug auf die Mobilität bei derartigen Situationen zu erhöhen.

Die Aufgabe wird durch jeden der unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird ein Verfahren zum Ausführen einer Funktionalität in Zusammenhang mit einer individuellen Mobilität (eines Nutzers und/oder eines Fahrzeugs) beschrieben. Das Verfahren umfasst das Ermitteln zumindest einer ersten Position eines Fahrzeugs (z.B. anhand eines GNSS (globales Navigationssattelitensystem) Empfängers). Des Weiteren umfasst das Verfahren das Ermitteln zumindest einer zweiten Position eines Anwendergeräts (z.B. eines Smartphones oder einer Smart Watch) eines Nutzers des Fahrzeugs (z.B. anhand eines GNSS Empfängers).

Die erste Position kann derart ermittelt werden, dass an der ersten Position eine erste vorausbestimmte Bedingung zutrifft. Alternativ oder ergänzend kann die zweite Position derart ermittelt werden, dass an der zweiten Position eine zweite vorausbestimmte Bedingung zutrifft.

Dabei können, personenspezifische und/oder situationsspezifische, besonders relevante ein oder mehrere erste Positionen und/oder zweite Positionen ermittelt werden, um abhängig von den ein oder mehreren ersten Positionen und/oder zweiten Positionen die zumindest eine (oder mehrere) Funktionalitäten im Zusammenhang mit der individuellen Mobilität zu bestimmen oder anzupassen.

Des Weiteren umfasst das Verfahren das Bestimmen und/oder Anpassen zumindest einer Funktionalität des Fahrzeugs und/oder des Anwendergeräts in Abhängigkeit von der ersten Position und der zweiten Position.

Das Bestimmen und/oder Anpassen einer Funktionalität des Fahrzeugs kann umfassen, insbesondere sein,
- Auswahl einer Funktionalität aus mehreren verschiedenen Funktionalitäten oder Auswahl einer Variante einer Funktionalität aus mehreren Varianten einer Funktionalität; und/oder
- Auswahl eines Betriebsmodus der Funktionalität; und/oder
- Variieren einer Logik, insbesondere einer Funktionslogik, der Funktionalität; und/oder
- Variieren einer Priorität und/oder einer Reihenfolge von mehreren Funktionalitäten oder von mehreren Merkmalen von einer oder mehreren Funktionalitäten; wobei das Variieren der Priorität und/oder der Reihenfolge insbesondere eine Anzeige von Information, ein Veranlassen eines Steuerungssignals, eine Veränderung und/oder eine Ausführung von ein oder mehreren Aktionen an dem Fahrzeug und/oder an dem Anwendergerät betrifft; und/oder
- Variieren und/oder Anpassen eines oder mehrerer, insbesondere quantitativer, Parameter und/oder Einstellungen der Funktionalität.

Bei der Funktionalität kann es sich handeln, um eine Planungsfunktionalität, Navigationsfunktionalität, Funktionalität zum zumindest teilweise automatisierten und/oder zumindest teilweise ferngesteuerten Fahren bzw. Parken, eine Funktionalität zur Abstimmung zwischen dem Nutzer und dem (intelligenten) Fahrzeug und/oder eine Funktionalität, die eine oder mehrere der vorgenannten Funktionalitäten ergänzt bzw. den Nutzer beim Nutzen einer Funktionalität unterstützt. Alternativ oder zusätzlich kann es sich um eine Funktionalität zur Unterstützung und/oder Verbesserung der individuellen (z.B. mehrere Verkehrsmittel und/oder Arten der Bewegung umfassenden) Mobilität handeln.

Bei der Funktionalität kann es sich (auch) um eine über die Nutzung (nur) des Fahrzeugs (z.B. Fahren, Parken, Rangieren) und/oder über die Nutzung (nur) des Anwendergeräts hinausgehende Funktionalität handeln. Die Funktionalität kann einen Zweck erfüllen bzw. zu einem Zweck ausgebildet sein, der von der Nutzung (Fahren, Parken, Rangieren) des Fahrzeugs und/oder Nutzung des Anwendergeräts überwiegend abstrahiert ist. Beispielsweise wird nicht oder nicht nur die Nutzung des Fahrzeugs und/oder des Anwendergeräts verbessert, sondern die individuelle Mobilität der ein oder mehreren Nutzer bzw. das Ergebnis der individuellen Mobilität der ein oder mehreren Nutzer.

Das Bestimmen und/oder Anpassen zumindest einer Funktionalität des Fahrzeugs und/oder des Anwendergeräts in Abhängigkeit von der ersten Position und der zweiten Position kann insbesondere erfolgen:
- abhängig von der Überprüfung, dass die erste Position die erste Bedingung erfüllt und/oder die zweite Position die zweite Bedingung erfüllt; und/oder
- abhängig von der Verarbeitung der ersten Position, und insbesondere der ersten Bedingung (z.B. Variante der ersten Bedingung oder eine von mehreren ersten Bedingungen), die die erste Position erfüllt; und/oder
- abhängig von der Verarbeitung der zweiten Position, und insbesondere der zweiten Bedingung (z.B. Variante der zweiten Bedingung oder eine von mehreren zweiten Bedingungen), die die zweite Position erfüllt.

Insbesondere können sich die erste Bedingung und/oder die zweite Bedingung auf eine Information aus einer digitalen Karte und/oder der sensorischen Erfassung der Umgebung (z.B. durch das Fahrzeug und/oder Anwendergärt) beziehen.

Insbesondere können die erste Bedingung und/oder die zweite Bedingung abhängig von Information aus der digitalen Karte (betreffend die Umgebung der ersten Position und/oder der zweiten Position), insbesondere von der Art und/oder Funktion der Straße und/oder Fläche (z.B. Parkfläche, Parkbedingung, Gebot, Verbot, geltendes Verkehrszeichen) und/oder von ein oder mehreren Objekten (z.B. Attraktion, Point / Object of Interest, Geschäft, Restaurant, öffentliche Einrichtung, Amt, Schule, etc. ) sein.

Insbesondere kann die erste Bedingung und/oder die zweite Bedingung mittels einer Auswertung der Sensorinformation und/oder einer Ansteuerung eines oder mehrerer Sensoren des Fahrzeugs bzw. des Anwendergeräts überprüft werden.

Die erste Bedingung und/oder die zweite Bedingung können auch abhängig von der zeitlichen Funktion (z.B. dem zeitlichen Verlauf und/oder dem räumlichen Verlauf) einer Größe, z.B. der Position des Fahrzeugs und/oder des Anwendergeräts, erkannt werden.

Die erste Bedingung kann sich auf eine Veränderungscharakteristik und/oder ein oder mehrere durch Daten (z.B. Bewegungsdaten, Sensordaten, etc.) des Fahrzeugs gebildete Muster beziehen. Die zweite Bedingung kann sich auf eine Veränderungscharakteristik und/oder ein oder mehrere durch Daten (z.B. Bewegungsdaten, Sensordaten, etc.) des Anwendergeräts gebildete Muster beziehen.

Die erste Bedingung und/oder die zweite Bedingung können eine Überschreitung eines gewissen Ähnlichkeitsmaßes mit einem oder mehreren bestimmten Mustern und/oder eine Unterschreitung eines gewissen Ähnlichkeitsmaßes mit einem oder mehreren anderen Mustern umfassen oder sein. Die Veränderungscharakteristik bzw. die ein oder mehreren Muster können sich z.B. auf eine zeitliche und/oder räumliche Veränderung der Daten des Fahrzeugs bzw. Anwendergeräts beziehen.

Insbesondere können sich die erste Bedingung und/oder die zweite Bedingung auf zeitlich verändernde und/oder zeitabhängige Gegebenheiten beziehen oder abhängig von solchen variiert werden. Zeitlich veränderliche bzw. zeitabhängige Gegebenheiten können z.B. eine aktuell geltende Verkehrsregel, Verkehrssituation, Auslastung eines Parkplatzes bzw. Parkhauses etc. und/oder einer mit dem Ziel und/oder Absicht des Nutzers zusammenhängende Gegebenheit, insbesondere Öffnungszeit (z.B. einer Sehenswürdigkeit am Zielort), betreffen.

Die erste Position und/oder das Zutreffen der ersten Bedingung können mit Mitteln des Fahrzeugs ermittelt, insbesondere erkannt, werden. Die zweite Position und/oder das Zutreffen der zweiten Bedingung können mit Mitteln des Anwendergeräts ermittelt, insbesondere erkannt, werden. Dabei kann es mehrere (vorausbestimmte) erste Bedingungen bzw. mehrere (vorausbestimmte) zweite Bedingungen geben. Beispielsweise kann das Zutreffen zumindest einer ersten bzw. zweiten Bedingung überprüft werden, wobei daraufhin eine Datenverarbeitung abhängig von der ersten Position und/oder der zweiten Position ausgeführt wird. Dabei kann auch berücksichtigt werden, welche von mehreren ersten bzw. zweiten Bedingungen erfüllt wurden.

Das Verarbeiten der ersten Position (z.B. auch: Positionsinformation, der Koordinaten und/oder mit den Koordinaten assoziierter Daten) und/oder der zweiten Position (z.B. auch: Positionsinformation, der Koordinaten und/oder mit den Koordinaten assoziierter Daten) kann abhängig von den Daten, die der ersten Bedingung bzw. der zweiten Bedingung zugrunde liegen, erfolgen.

Im Rahmen des Verfahrens kann insbesondere ein Unterschied zwischen der ersten Position des Fahrzeugs und der zweiten Position des Anwendergeräts ermittelt werden. Dabei kann der Unterschied kennzeichnend sein, für:
- eine relative Position betreffend das Fahrzeug und das Anwendergerät;
- eine Distanz zwischen dem Fahrzeug und dem Anwendergerät; eine erste Länge und/oder ein erstes Merkmal einer ersten Route, insbesondere auf einer Fahrzeugstraße und/oder für ein Fahren in dem Fahrzeug; und/oder
- eine zweite Länge und/oder ein zweites Merkmal einer zweiten Route, insbesondere auf einer Fußgängerstraße und/oder für eine Bewegung des Nutzers als Fußgänger oder mit einem von dem Fahrzeug abweichenden Verkehrsmittel.

Das Bestimmen oder das Anpassen der Funktionalität des Fahrzeugs und/oder des Anwendergeräts kann dann besonders vorteilhaft (z.B. mit einem funktionalen Vorteil für den Nutzer, im Sinne des Nutzers und/oder in besonders präziser Weise) in Abhängigkeit von dem ermittelten Unterschied erfolgen.

Die Funktionalität des Fahrzeugs und/oder des Anwendergeräts kann betreffen,
- eine Bewegung des Nutzers zu dem Fahrzeug als Fußgänger und/oder mit einem weiteren Verkehrsmittel; und/oder
- eine Bewegung des Fahrzeugs, insbesondere in einem zumindest teilweise automatisierten und/oder zumindest teilweise ferngesteuerten Fahrmodus, zu dem Nutzer; und/oder
- eine Bewegung des Nutzers und eine Bewegung des Fahrzeugs zu einem gemeinsamen Treffpunkt.

Es wird somit ein Verfahren beschrieben, durch das die Mobilität eines Fahrzeugnutzers und/oder des Fahrzeugs und/oder eine Abstimmung zwischen dem Nutzer und dem Fahrzeug auf eine neuartige Art und Weise und/oder in besonderem Maße unterstützt wird.

Im Rahmen des Verfahrens kann ein Treffpunkt zwischen dem Fahrzeug und dem Nutzer ermittelt, insbesondere angepasst, werden. Dies kann in besonders vorteilhafter Weise in Abhängigkeit von einem weiteren Ziel erfolgen, welches nachfolgend zu dem Treffpunkt von dem Nutzer mit dem Fahrzeug angestrebt, insbesondere erreicht, werden soll.

Das Verfahren kann umfassen, das Ermitteln, insbesondere das Erfassen über eine Benutzerschnittstelle (des Anwendergeräts), von Ziel-Information in Bezug auf das weitere Ziel. Dabei kann die Ziel-Information das Ziel, insbesondere im Wesentlichen nur, gemäß ein oder mehrerer Merkmale des Ziels und/oder abstrahiert von einer bestimmten Position, von einem bestimmten Fahrtziel und/oder von einem bestimmten Ende einer Route und/oder von einer konkreten Einrichtung beschreiben.

Der Treffpunkt zwischen dem Fahrzeug und dem Nutzer kann dann in besonders vorteilhafter Weise auf Basis der Ziel-Information ermittelt werden.

Die Funktionalität kann ausgebildet sein, zumindest zwei Ziele zu berücksichtigen. Dabei können ein oder mehrere der zumindest zwei Ziele jeweils ein Fahrtziel für das Fahrzeugs umfassen. Alternativ oder ergänzend können ein oder mehrere der zumindest zwei Ziele jeweils ein von einer bestimmten Position, von einem bestimmten Fahrtziel und/oder von einem bestimmten Ende einer Route und/oder von einer konkreten Einrichtung abstrahiertes Ziel umfassen. Durch die Berücksichtigung eines (Routen-) Ziels kann der Mobilitätskomfort für den Nutzer in besonderem Maße erhöht werden.

Das Bestimmen und/oder Anpassen der Funktionalität des Fahrzeugs und/oder des Anwendergeräts kann ein Bestimmen und/oder Anpassen des möglichen Treffpunkts zwischen dem Fahrzeug und dem Nutzer umfassen. Dabei kann der Treffpunkt auf Basis von ein oder mehreren Kriterien bestimmt und/oder angepasst werden, insbesondere:
- eine verringerte, insbesondere optimierte, Zeit bis zu einem Treffen, insbesondere bis zu einer Einstiegsmöglichkeit des Nutzers in das Fahrzeug; und/oder
- eine verringerte, insbesondere optimierte, Zeit zum Erreichen eines weiteren Ziels nach dem Einstieg des Nutzers in das Fahrzeug oder ohne Nutzung des Fahrzeugs; und/oder
- eine Möglichkeit zum Anhalten des Fahrzeugs und/oder zum Einsteigen in das Fahrzeug; und/oder
- eine verringerte Laufstrecke für den Nutzer; und/oder
- verringerte Kosten, insbesondere Energiekosten und/oder Fahrpreiskosten und/oder Mietkosten für ein weiteres Verkehrsmittel; und/oder
- ein verringerter, insbesondere gesamter, Energieverbrauch; und/oder
- eine verbesserte ökologische Bilanz, insbesondere bis zu dem Treffpunkt und/oder bis zu einem weiteren Ziel.

Dabei kann eine weitere (funktionale) Verbesserung in Zusammenhang mit der individuellen Mobilität (z.B. betreffend Komfort, Zeitersparnis, Energieersparnis, Planung, Navigation, antizipative Wirkung gegenüber dem Nutzer, etc.) erreicht werden.

Das Verfahren kann umfassen, das Verwenden der ersten Position des Fahrzeugs und/oder des, insbesondere des den ein oder mehreren eingestellten Kriterien entsprechenden, Treffpunkts mit dem Fahrzeug als ein Zielvorschlag oder ein Ziel in dem Anwendergerät des Nutzers, insbesondere in Zusammenhang mit einer Routenplanung und/oder Routenführung. So kann der Mobilitätskomfort für einen Fahrzeugnutzer weiter erhöht werden.

Das Bestimmen und/oder Anpassen der Funktionalität kann erfolgen, abhängig von:
- einem Nutzerkonto des Nutzers des Fahrzeugs; und/oder
- mit dem Nutzerkonto assoziierten Daten; und/oder
- einer Aggregation von Daten mit dem Nutzerkonto und/oder mit dem mit dem Nutzerkonto assoziierten Daten.

Alternativ oder ergänzend kann das Bestimmen und/oder Anpassen der Funktionalität erfolgen, abhängig von einer Mitgliedschaft des Nutzers des Fahrzeugs, insbesondere von einer Mitgliedschaft in einem sozialen Netz und/oder in einem Messenger-Dienst.

Durch das Kombinieren der Funktionalität mit einem Nutzerkonto und/oder einer Mitgliedschaft des Nutzers kann eine (weitere, funktionale) Verbesserung in Zusammenhang mit der individuellen Mobilität (z.B. betreffend Komfort, Zeitersparnis, Energieersparnis, Planung, Navigation, antizipative Wirkung gegenüber dem Nutzer, etc.) erreicht werden.

Gemäß einem weiteren Aspekt wird ein System zum Ausführen einer Funktionalität in Zusammenhang mit einer individuellen Mobilität beschrieben. Das System ist eingerichtet, zumindest eine erste Position eines Fahrzeugs zu ermitteln, und zumindest eine zweite Position eines Anwendergeräts eines Nutzers des Fahrzeugs zu ermitteln. Das System ist ferner eingerichtet, eine Funktionalität des Fahrzeugs und/oder des Anwendergeräts in Abhängigkeit von der ersten Position und der zweiten Position zu bestimmen und/oder anzupassen.

Das System kann ein eine entsprechende Vorrichtung des Fahrzeugs, eine entsprechende Vorrichtung des Anwendergeräts, und insbesondere eine Vorrichtung des Backend umfassen bzw. durch diese Vorrichtungen (zumindest zeitweise) gebildet sein.

Gemäß einem weiteren Aspekt wird ein (Straßen-) Kraftfahrzeug (insbesondere ein Personenkraftwagen oder ein Lastkraftwagen oder ein Bus oder ein Motorrad) beschrieben, das zur Ausführung des Verfahrens (auch: eines entsprechenden Teils des Verfahrens) eingerichtet ist. Das Fahrzeug ist insbesondere eingerichtet zum Betrieb als ein Teil des beschriebenen Systems.

Gemäß einem weiteren Aspekt wird ein Anwendergerät (z.B. ein Smartphone oder eine Smart Watch) beschrieben, das zur Ausführung des Verfahrens (auch: eines entsprechenden Teils des Verfahrens) eingerichtet ist. Das Anwendergerät ist insbesondere eingerichtet zum Betrieb als ein Teil des beschriebenen Systems.

Gemäß einem weiteren Aspekt wird ein Backend (ggf. ein Netzwerk-Server) beschrieben, der zur Ausführung des Verfahrens (auch: eines entsprechenden Teils des Verfahrens) eingerichtet ist. Das Backend ist insbesondere eingerichtet zum Betrieb als ein Teil des beschriebenen Systems.

Gemäß einem weiteren Aspekt wird ein Computerprogramm, insbesondere ein Computerprogrammprodukt umfassend ein Computerprogramm, beschrieben, wobei das Computerprogramm ausgebildet ist, bei seiner Ausführung auf zumindest einer Recheneinheit zumindest eines der in diesem Dokument beschriebenen Verfahren auszuführen. Es können mehrere Computerprogramme bzw. ein Computerprogrammprodukt umfassend mehrere Computerprogramme sein, die z.B. auf unterschiedlichen Recheneinheiten der Vorrichtung bzw. auf mehreren Vorrichtungen (z.B. des Anwendergeräts, des Fahrzeugs und/oder des Backend) lauffähig sind, um (ggf. zusammen, in einer informationstechnischen Wirkverbindung) zumindest eines der in diesem Dokument beschriebenen Verfahren auszuführen.

Das Computerprogrammprodukt kann als ein Update eines bisherigen Computerprogramms ausgebildet sein, welches beispielsweise im Rahmen einer Funktionserweiterung, beispielsweise im Rahmen eines sogenannten "Remote Software Update" die Teile des Computerprogramms bzw. des entsprechenden Programmcodes umfasst. Das Computerprogrammprodukt umfasst insbesondere ein von der Datenverarbeitungsvorrichtung lesbares Medium, auf dem der Programmcode gespeichert ist, oder zumindest eine verschlüsselte Datei.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden. Ferner sind in Klammern aufgeführte Merkmale als optionale Merkmale zu verstehen.

Im Weiteren wird die Erfindung ohne Einschränkung der Allgemeinheit anhand von Ausführungsbeispielen näher beschrieben. Dabei zeigen
Figuren 1a bis 1c jeweils ein beispielhaftes System mit einem Fahrzeug und einem Anwendergerät; und
Figur 2 ein Ablaufdiagramm eines beispielhaften Verfahrens zum Betrieb einer Funktionalität eines Fahrzeugs und/oder eines Anwendergeräts.

Wie bereits eingangs dargelegt, befasst sich das vorliegende Dokument mit einem Verfahren, einer Vorrichtung, insbesondere einen Anwendergerät, sowie einem Computerprodukt, zum Ausführen einer Funktionalität. Insbesondere befasst sich das vorliegende Dokument mit der Schaffung bzw. Verbesserung einer Fahrzeugfunktionalität und/oder einer Funktionalität eines Anwendergeräts, insbesondere einer (erweiterten) Planungsfunktionalität und/oder Navigationsfunktionalität und/oder Fahrzeugführungsfunktion.

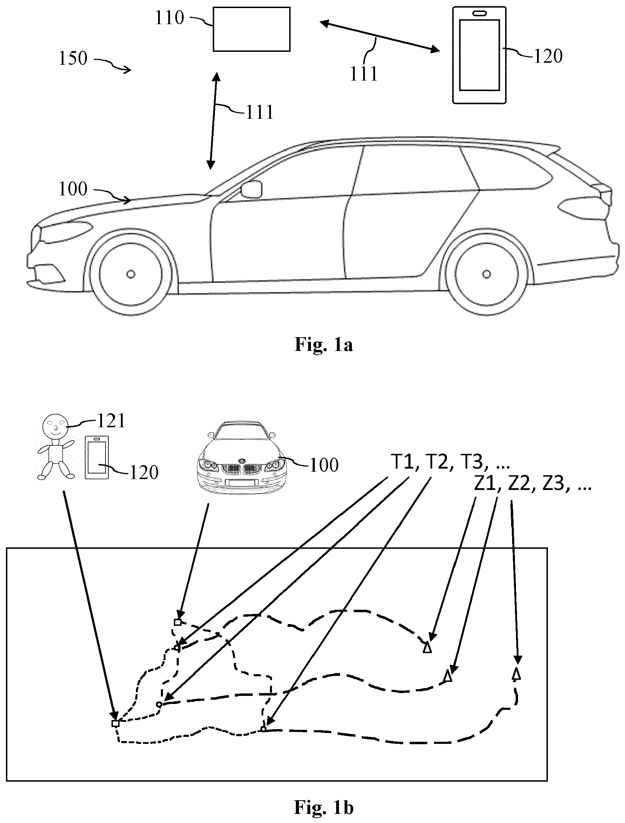

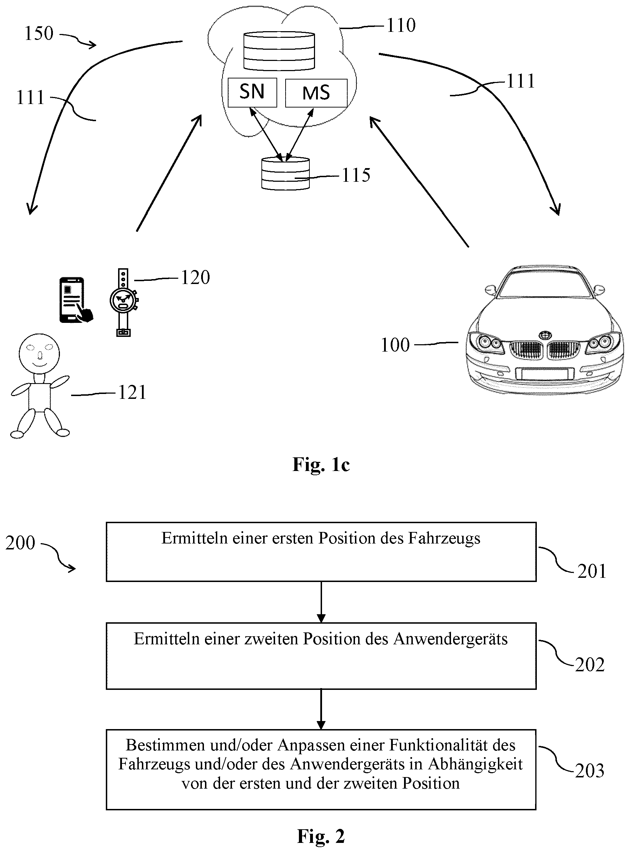

In diesem Zusammenhang zeigen Figuren 1a bis 1c jeweils ein beispielhaftes System 150 mit einem Fahrzeug 100 und einem Anwendergerät 120 (etwa einem Smart Device). Das Fahrzeug 100 und das Anwendergerät 120 können jeweils mit einer Steuereinheit 110 (z.B. mit einem Backend-Server) über eine (drahtlose) Kommunikationsverbindung 111 verbunden sein.

Fig. 2 zeigt ein Ablaufdiagramm eines (ggf. Computer-implementierten) Verfahrens 200 zur Bereitstellung und/oder zum Betrieb einer Funktionalität eines Fahrzeugs 100 und/oder eines Anwendergeräts 120. Das Verfahren 200 ist insbesondere zum Ausführen einer Funktionalität in Zusammenhang mit einer individuellen Mobilität ausgebildet. Das Verfahren 200 umfasst das Ermitteln 201 zumindest einer ersten Position eines (Kraft-) Fahrzeugs 100 und das Ermitteln 202 zumindest einer zweiten Position eines Anwendergeräts 120 (etwa eines Smart Devices wie z.B. eines Smartphones oder einer Smart Watch) eines Nutzers 121 des Fahrzeugs 100. Das Verfahren 200 umfasst ferner das Bestimmen und/oder Anpassen 203 einer Funktionalität des Fahrzeugs 100 und/oder des Anwendergeräts 120, insbesondere in Abhängigkeit von der ersten Position und der zweiten Position.

Es wird somit ein Verfahren 200 zum Ausführen einer Funktionalität im Zusammenhang mit einer individuellen Mobilität beschrieben. Das Verfahren 200 kann umfassen, das Ermitteln 201 einer oder mehrerer ersten Positionen des Fahrzeugs 100, sowie das Ermitteln 202 einer oder mehrerer zweiten Positionen des Anwendergeräts 120 eines Nutzers 121 des Fahrzeugs 100. Ferner kann das Verfahren 200 daraufhin umfassen, das Bestimmen oder Anpassen 203 einer Funktionalität des Fahrzeugs 100 und/oder des Anwendergeräts 120 (auf Basis der zumindest einen ersten Position und auf Basis der zumindest einen zweiten Position).

Zu der ersten Position, ihrer Merkmale und/oder Erfassung sei angemerkt:
Beispielsweise kann es sich bei der ersten Position des Fahrzeugs 100 um eine Position handeln, die in einem zeitlichen und/oder kausalen Zusammenhang mit dem Anhalten, dem Einparken, dem Klemmenwechsel (Ausschalten des Antriebsmotors und/oder eines Anteils des Fahrzeugbordnetzes), dem Ausstieg eines oder mehrerer, insbesondere aller Insassen, dem Abschließen des Fahrzeugs 100 und/oder dem Einschlafen bzw. dem Herunterfahren des Bordnetzes des Fahrzeugs 100 steht.

Zu der zweiten Position, ihrer Merkmale und/oder Erfassung sei angemerkt: Beispielsweise kann die zweite Position des Anwendergeräts 120 des Nutzers 121 des Fahrzeugs 100 eine Position des Anwendergeräts 120 nach einem Ausstieg aus dem Fahrzeug 100 und/oder nach der Aktivierung einer oder mehrerer im vorliegenden Dokument beschriebener Funktionalitäten kennzeichnen. Beispielsweise kann die zweite Position (z.B. innerhalb regelmäßiger Zeitintervalle und/oder bei ihrer Veränderung) ermittelt werden und/oder kann im Verfahren 200 verwendet werden, wenn erkannt wird, dass sich diese von der ersten Position des Fahrzeugs 100 unterscheidet.

Die zweite Position kann eine Position beim Einstieg in ein Verkehrsmittel und/oder beim Umstieg des Nutzers 121 zwischen zumindest zwei unterschiedlichen Verkehrsmitteln (wobei eines der Verkehrsmittel das Fahrzeug 100 sein kann) umfassen oder sein.

Die erste Bedingung, die auf die erste Position zutrifft (insbesondere auch aufzufassen als: die erste Bedingung, abhängig von der die erste Position ermittelt wird) und/oder die auf die zweite Position zutrifft (insbesondere auch aufzufassen als: die zweite Bedingung, abhängig von der die zweite Position ermittelt wird) kann bzw. können (ggf. jeweils) ermittelt oder gewählt werden, abhängig von:
- der Person (auch: Identität) des Nutzers 121 (z.B. anhand der Erkennung eines von mehreren Nutzern des Fahrzeugs 100) bzw. von mit dem Nutzer 121 assoziierten Daten; und/oder
- persönliche Einstellungen des Nutzers 121 (z.B. im Fahrzeug 100 und/oder im Anwendergerät 120 oder betreffend die Funktionalität im Zusammenhang mit der individuellen Mobilität); und/oder
- einer oder mehreren vorangegangenen Verwendungen des Fahrzeugs 100 und/oder des Anwendergeräts 120 und/oder der Funktionalität; und/oder
- einem erkannten oder (z.B. in Bezug auf ein Zeitintervall in der Zukunft (z.B. in einigen Minuten oder Stunden)) prädizierten Bedürfnis und/oder Absicht des Nutzers 121 des Fahrzeugs 100.

Dadurch kann die Funktionalität besser an die Person, an die konkrete (aktuelle bzw. erwartete) Situation bzw. Absicht sowie an den aktuellen Bedarf des Nutzers 121 angepasst werden. Diese kann somit eine antizipative Wirkung aufweisen. Dabei kann eine weitere (funktionale) Verbesserung in Zusammenhang mit der individuellen Mobilität (z.B. betreffend Komfort, Zeitersparnis, Energieersparnis, Planung, Navigation, antizipative Wirkung gegenüber dem Nutzer, etc.) erreicht werden.

Die erste Position und/oder die zweite Position können (jeweils) eine Geo-Position (z.B. GPS, Glonass, Galileo, etc.) und/oder eine Position in Relation zu ein oder mehreren bestimmten Objekten in der Umgebung umfassen oder sein.

Insbesondere kann eine relative Position und/oder es können relative Bewegungsdaten ermittelt und berücksichtigt werden. Diese können (jeweils) in Bezug zueinander und/oder zu einem oder mehreren, insbesondere markanten, Objekten ermittelt bzw. berücksichtigt werden. Dies können Objekte sein, die (z.B. mittels eines Symbols und/oder ihrer schemenhaften Abbildung) relativ leicht und/oder eindeutig zugeordnet werden können. Objekte können sogenannte markante Objekte sein. Bevorzugt können derartige Objekte gewählt und/oder abgebildet sein, die in der Umgebung möglichst nur einmal vorkommen und/oder von weiteren Objekten (z.B. durch qualitative Merkmale) unterscheidbar sind.

Beispielhafte Objekte in der Umgebung können umfassen oder sein:
- Fahrbahnanordnungen (z.B. Kreuzungen, Kreisverkehre, Ein- bzw. Ausfahrten);
- Spuren, Spurenmarkierungen, Fahrbahnbegrenzungen (z.B. Leitplanken);
- Verkehrszeichen; und/oder
- Bäume und/oder Gebäude.

Beispielsweise können ein oder mehrere für den Nutzer 121 wirksame bzw. wesentliche Schritte des Verfahrens 200 aktiviert bzw. ausgeführt werden, wenn erkannt wird, dass die erste Position des Fahrzeugs 100 und die zweite Position des Anwendergeräts 120 einen gewissen, insbesondere im Verlauf der Zeit (zumindest tendenziell) steigenden, Unterschied untereinander aufweisen. Insbesondere dann, wenn die erste Position und die zweite Position zuvor im Wesentlichen übereinstimmend waren und/oder sich im Wesentlichen gleich bzw. synchron verändert haben.

Beispielsweise kann (auch unabhängig von den absoluten Werten der ersten Position und/oder zweiten Position) ein Unterschied zwischen der ersten Position des Fahrzeugs 100 und der zweiten Position des Anwendergeräts 120 (jeweils und/oder innerhalb regelmäßiger Zeitintervalle und/oder abhängig von einer jeweiligen vorausbestimmten Bedingung) ermittelt und (ggf. anstatt der jeweiligen absoluten Werte) im Verfahren 200 berücksichtigt werden. Das heißt insbesondere, dass wenn in diesem Dokument etwas abhängig von der ersten Position und der zweiten Position ermittelt oder veranlasst ist, so kann darunter auch "abhängig vom Unterschied zwischen der ersten Position und der zweiten Position" aufgefasst werden.

Zum Bestimmen oder Anpassen 203 der Funktionalität kann insbesondere gezählt werden:
- Variieren eines oder mehrerer Parameter und/oder Modi der Funktionalität; und/oder
- Einflussnahme auf eine (z.B. ohnehin vorhandene und/oder auszuführende Funktionalität); und/oder
- Optimieren der Funktionalität gemäß eines, insbesondere wählbaren, Kriteriums; und/oder
- Veranlassen und/oder Ausführen der Funktionalität.

Die Funktionalität kann eine Planungsunterstützung und/oder Navigationsunterstützung und/oder zumindest teilweise automatisierte Führung des Fahrzeugs 100 und/oder eines weiteren Verkehrsmittels umfassen oder sein. Das Verfahren 200 ist allerdings nicht auf derartige Funktionalitäten oder ihre Merkmale beschränkt.

Es kann sich bei den ein oder mehreren ersten Positionen um jeweils eine Position beim Zutreffen einer ersten vorausbestimmten Bedingung handeln. Alternativ oder ergänzend kann es ich bei den ein oder mehreren zweiten Positionen um jeweils eine Position beim Zutreffen einer zweiten vorausbestimmten Bedingung handeln.

Beispielsweise kann die erste Position abhängig von der Erkennung des Anhaltens, des Einparkens, des Klemmenwechsels (Ausschalten des Antriebsmotors und/oder eines Anteils des Fahrzeugbordnetzes), des Ausstiegs eines oder mehrerer, insbesondere aller Insassen, des Abschließens des Fahrzeugs 100 und/oder des Einschlafens des Bordnetzes des Fahrzeugs 100 ermittelt, als solche gekennzeichnet und/oder verarbeitet werden.

Die erste vorausbestimmte Bedingung kann (daher) eine bestimmte, z.B. abhängig von einer oder mehreren Werkseinstellungen und/oder Nutzereinstellungen gewählte bzw. wählbare, Abhängigkeit vom Anhalten oder Einparken des Fahrzeugs 100, vom Klemmenwechsel (z.B. Einschalten oder Ausschalten des Antriebsmotors und/oder eines Anteils des Fahrzeugbordnetzes), vom Ausstieg eines oder mehrerer, insbesondere aller Insassen, vom Abschließen des Fahrzeugs 100 und/oder vom Einschlafen des Bordnetzes des Fahrzeugs 100 aufweisen.

Die zweite Position kann eine Position beim Einstieg des Nutzers 121 in ein Verkehrsmittel, beim Ausstieg aus einem Verkehrsmittel und/oder beim Umstieg des Nutzers 121 zwischen zumindest zwei Verkehrsmitteln (wobei eines der Verkehrsmittel das Fahrzeug 100 sein kann) umfassen oder sein. Die zweite vorausbestimmte Bedingung kann (daher) eine bestimmte, z.B. abhängig von einer oder mehreren Werkseinstellungen und/oder Nutzereinstellungen gewählte bzw. wählbare, Abhängigkeit vom Einstig und/oder Ausstieg aus einem Verkehrsmittel und/oder vom Umstieg des Nutzers 121 zwischen zumindest zwei Verkehrsmitteln (wobei eines der Verkehrsmittel das Fahrzeug 100 sein kann) aufweisen. Eines der Verkehrsmittel kann sich von dem Fahrzeug 100 (des Nutzers 121) oder von einem Kraftfahrzeug als solchen unterscheiden.

Im Rahmen des Verfahrens 200 kann ein Unterschied zwischen der ersten Position des Fahrzeugs 100 und der zweiten Position des Anwendergeräts 120 des Nutzers 121 des Fahrzeugs 100 ermittelt und berücksichtigt werden, wobei der Unterschied insbesondere kennzeichnend ist für:
- eine relative Position betreffend das Fahrzeug 100 und das Anwendergerät 120;
- eine Distanz zwischen dem Fahrzeug 100 und dem Anwendergerät 120;
- eine erste Länge und/oder ein erstes Merkmal einer ersten Route, insbesondere auf einer Fahrzeugstraße und/oder im Falle eines Fahrens im Fahrzeug 100; und/oder
- eine zweite Länge und/oder ein zweites Merkmal einer zweiten Route, insbesondere auf einer Fußgängerstraße und/oder im Falle einer Bewegung des Nutzers 121 als Fußgänger oder mit einem von dem Fahrzeug 100 abweichenden Verkehrsmittel.

Abhängig von dem Unterschied zwischen der ersten Position des Fahrzeugs 100 und der zweiten Position des Anwendergeräts 120 des Nutzers 121 des Fahrzeugs 100 kann (sozusagen als ein Zwischenschritt des Verfahrens 200) eine benötigte (z.B. im Falle einer Bewegung erforderliche bzw. wahrscheinliche) Bewegungsdauer ermittelt und berücksichtigt werden. Die Bewegungsdauer kann als ein o.g. Merkmals der (jeweiligen) Route aufgefasst werden.

Besonders bevorzugt werden:
- die erste Länge und/oder das erste Merkmal der ersten Route, insbesondere die voraussichtliche Bewegungsdauer beim Befolgen der ersten Route; und
- die zweite Länge und/oder das zweite Merkmal der zweiten Route, insbesondere die voraussichtliche Bewegungsdauer beim Befolgen der zweiten Route;
im Verfahren 200 verarbeitet und/oder berücksichtigt. Dabei kann ein Abgleich der ersten Länge und/oder des ersten Merkmals, insbesondere der Bewegungsdauer, mit der zweiten Länge und/oder mit dem zweiten Merkmal, insbesondere der Bewegungsdauer, erfolgen

Die Funktionalität des Fahrzeugs 100 und/oder des Anwendergeräts 120 kann betreffen:
- eine Bewegung des Nutzers 121 zum Fahrzeug 100 als Fußgänger und/oder mit einem weiteren Verkehrsmittel zum Fahrzeug 100; und/oder
- eine Bewegung des Fahrzeugs 100, insbesondere in einem zumindest teilweise automatisierten und/oder zumindest teilweise ferngesteuerten Fahrmodus, zum Nutzer 121 des Fahrzeugs 100; und/oder
- eine Bewegung des Nutzers 121 und eine Bewegung des Fahrzeugs 100 zu einem möglichen Treffpunkt (T1, T2, T3, ...) des Nutzers 121 mit dem Fahrzeug 100.

Der Treffpunkt kann insbesondere eine Einstiegsmöglichkeit in das Fahrzeug 100 und/oder eine Umstiegsmöglichkeit in das Fahrzeug 100 umfassen oder sein.

Das weitere Verkehrsmittel kann z.B. ein Skooter, ein Zweirad, ein Shared-Fahrzeug und/oder ein ÖVPN-Fahrzeug sein.

Beispielsweise kann die Funktionalität (auch) abhängig von dem Unterschied zwischen der ersten Position des Fahrzeugs 100 und der zweiten Position des Anwendergeräts 120 des Nutzers 121 des Fahrzeugs 100 und/oder der Karteninformation und/oder einem vorausbestimmten Kriterium bestimmt oder angepasst werden.

Im Rahmen des Verfahrens 200 kann ein Treffpunkt (T1, T2, T3, ...) von dem Nutzer 121 des Anwendergeräts 120 und des Fahrzeugs 100 bestimmt oder angepasst werden, abhängig von dem Ziel (Z1, Z2, Z3, ...), welches nach dem Einstieg des Nutzers 121 in das Fahrzeug 100 erreicht werden soll. Dabei kann das Ziel (Z1, Z2, Z3, ...), insbesondere im Wesentlichen nur, gemäß seiner Merkmale und/oder abstrahiert von einer bestimmten Position, von einem bestimmten Fahrtziel, und/oder von einem bestimmten Ende der Route und/oder von einer konkreten Einrichtung zum Erreichen des Ziels (Z1, Z2, Z3, ...) eingebbar sein (z.B. über eine Benutzerschnittstelle des Anwendergeräts 120). Mit anderen Worten kann der Nutzer 121 ein von einem konkreten Fahrtziel und/oder von einem bestimmten Ende der Route und/oder von einer konkreten Einrichtung zum Erreichen des Ziels abstrahiertes Ziel (Z1, Z2, Z3, ...) eingeben. Die Funktionalität (z.B. jede der zahlreichen im vorliegenden Dokument beschriebenen Varianten der Funktionalität) kann eingerichtet werden, (auch) ein solches Ziel (Z1, Z2, Z3, ...) zu berücksichtigen.

Beispielsweise kann das Ziel (des Treffens eines Fahrzeugs 100 und/oder des Einstiegs in ein Fahrzeug 100) in Form eines oder mehrerer Merkmale eines (unmittelbar oder daraufhin) zu erzielenden Ergebnisses eingebbar sein. Dadurch kann sich durch das Verfahren 200 ein signifikant größerer bzw. qualitativ unterschiedlicher Vorteil ergeben, da eine fehlerfreie bzw. präzise Einschätzung durch den Nutzer 121 (mit oder ohne Nutzung einzelner technischer Mittel) wesentlich schwieriger wäre.

Beispielsweise kann das Ziel als Mittel zum Erreichen eines oder mehrerer folgender Merkmale bzw. Merkmale eines gewünschten Ergebnisses eingebbar sein bzw. berücksichtigt werden (d.h. die Ziel-Information kann umfassen):
- Laden bzw. Tanken des Fahrzeugs 100 an (irgend)einer Ladestation bzw. Tankstelle, insbesondere mit einem bestimmten (z.B. vorgebbaren) Merkmal und/oder mit einer bestimmten Bewertung;
- Einkaufen, insbesondere mit einem bestimmten (z.B. vorgebbaren) Merkmal, und/oder mit einer bestimmten Bewertung;
- Essen in (irgend)einem Lokal, insbesondere mit einem bestimmten (z.B. vorgebbaren) Merkmal (z.B. Vegetarisch, Pizza, Steak, ... Europäisch, Chinesisch, Japanisch, ... Günstig, ...) und/oder mit einer bestimmten Bewertung;
- Übernachten, insbesondere mit einem bestimmten (z.B. vorgebbaren) Merkmal und/oder mit einer bestimmten Bewertung;
- Technischer Service für das Fahrzeug 100, insbesondere mit einem bestimmten (z.B. vorgebbaren) Merkmal und/oder mit einer bestimmten Bewertung;
- Zum Arzt gehen, insbesondere mit einem bestimmten (z.B. vorgebbaren) Merkmal und/oder mit einer bestimmten Bewertung;
- Ein weiteres Verkehrsmittel, z.B. Anschlusszug, S-Bahn, Bus, insbesondere mit einem bestimmten (z.B. vorgebbaren) Merkmal und/oder mit einer bestimmten Bewertung, insbesondere ohne eine Festlegung einer konkreten Station oder Umstiegs-Position und/oder eines konkreten Umstiegs-Zeitpunkts.

Die Funktionalität kann ausgebildet sein, zumindest zwei vorgebbare Ziele (Z1, Z2, Z3, ...) zu berücksichtigen, wobei
- zumindest ein oder mehrere der zumindest zwei Ziele (Z1, Z2, Z3, ...) ein Fahrtziel umfasst; und/oder
- zumindest ein oder mehrere der zumindest zwei Ziele (Z1, Z2, Z3, ...) ein von einer bestimmten Position, einem bestimmten Fahrtziel, und/oder einem bestimmten Ende der Route und/oder einer konkreten Einrichtung zum Erreichen des Ziels (Z1, Z2, Z3, ...) abstrahiertes Ziel (Z1, Z2, Z3, ...) umfasst.

Das "Ziel" kann insbesondere von dem Fahrziel abweichen und es kennzeichnend sein für etwas, was der Nutzer nach dem Ankommen erreichen möchte.

Es kann eine Anzahl und/oder eine bestimmte Sequenz von Zielen (auch eine Kombination aus konkreten und abstrakten Zielen) eingegeben und berücksichtigt werden.

Die Funktionalität des Fahrzeugs 100 und/oder des Anwendergeräts 120 kann ein Bestimmen oder Anpassen eines möglichen Treffpunkts (T1, T2, T3, ...) zwischen dem Fahrzeug 100 und dem Nutzer 121 umfassen. Dabei kann der Treffpunkt (T1, T2, T3, ...) nach einem oder mehreren Kriterien wählbar sein, insbesondere:
- Verringerte, insbesondere optimierte, Zeit bis zum Treffen, insbesondere bis zu einer Einstiegsmöglichkeit des Nutzers 121 in das Fahrzeug 100; und/oder
- Verringerte, insbesondere optimierte, Zeit zum Erreichen eines weiteren Ziels (Z1, Z2, Z3, ...) nach dem Einstieg in das Fahrzeug 100 oder anstatt das Fahrzeug 100 zu nutzen; und/oder
- Möglichkeit zum Anhalten des Fahrzeugs 100 und/oder um in das Fahrzeug 100, insbesondere gemäß einer Vorgabe und/oder komfortabel, einsteigen zu können; und/oder
- Verringerte Laufstrecke für den Nutzer 121; und/oder
- Verringerte Kosten, insbesondere Energiekosten und/oder Fahrpreis und/oder Mietkosten für ein weiteres Verkehrsmittel; und/oder
- Verringerter, insbesondere gesamter, Energieverbrauch; und/oder
- Verbesserte ökologische Bilanz, insbesondere bis zum Treffpunkt und/oder bis zum Ziel (Z1, Z2, Z3, ...).

Bevorzugt kann der Treffpunkt abhängig von einer (z.B. durch den Nutzer 121 einstellbaren) Gewichtung von zumindest zwei Kriterien ermittelt werden. Beispielsweise kann der Nutzer 121 das Gewicht (insbesondere auch zu verstehen als Wichtigkeit) von zumindest zwei Kriterien (z.B. mittels einer Bedienschnittstelle, beispielsweise "Regler", etwa in seiner App des Anwendergeräts 120) bestimmen.

Beispielsweise kann der (jeweils aus aktueller Sicht aktualisierte) Treffpunkt (z.B. abhängig von der Position, der Bewegungsrichtung und/oder einem Zwischenziel des Nutzers 121), insbesondere laufend bzw. bei signifikanten Veränderungen, (z.B. betreffend das Ergebnis der Funktion und/oder der jeweils gewählten Optimierung) aktualisiert werden. Beispielsweise kann der Treffpunkt (z.B. die Position des Treffpunkts) aktualisiert werden, wenn:
- das Fahrzeug 100 sich abweichend von der Prognose bewegt (z.B. schneller oder langsamer vorankommt, und/oder eine Abweichung von der vorgeschlagenen ersten Route vornimmt); und/oder
- ein erster Verkehrsparameter, insbesondere Verkehrsdichte, Stau, Ampelschaltungen oder die Prognose für einen ersten Verkehrsparameter betreffend die erste Route, von einer früheren Prognose abweicht; und/oder
- der Nutzer sich abweichend von der Prognose bewegt (z.B. schneller oder langsamer vorankommt, und/oder eine Abweichung von der vorgeschlagenen zweiten Route vornimmt); und/oder
- ein zweiter Verkehrsparameter, insbesondere Verkehrsdichte, Stau, Ampelschaltungen oder die Prognose für einen ersten Verkehrsparameter betreffend die erste Route, von einer früheren Prognose abweicht.

Alternativ oder zusätzlich können zumindest zwei (mögliche) durch den Nutzer 121 wählbare Treffpunkte vorgeschlagen werden. Dies kann z.B. mittels einer Anzeige der Treffpunkte und/oder mittels einer oder mehrerer vorgeschlagener Routen zu dem jeweiligen Treffpunt erfolgen. Beispielsweise werden zumindest zwei oder drei am meistens empfehlenswerte bzw. nach vorgebbaren Kriterien ermittelte Treffpunkte vorgeschlagen.

Beispielsweise können Merkmale und/oder ein Vergleich von Merkmalen von unterschiedlichen Treffpunkten, insbesondere eine Auswirkung auf die Zeit bis zum Treffpunkt und/oder zum Erreichen eines Ziels, ermittelt und im Verfahren 200 berücksichtigt werden und/oder (z.B. an den Nutzer 121) ausgegeben werden. Dabei kann der Grad der Erreichbarkeit des Ziels, insbesondere eines oder mehrerer vorgebbarer (ggf. vorgegebener) Merkmaler des Ziels, ermittelt und/oder angezeigt bzw. im Verfahren 200 berücksichtigt werden.

Im Rahmen des Verfahrens 200 kann die Position des Fahrzeugs 100 und/oder des, insbesondere einem oder mehreren eingestellten Kriterien entsprechenden Treffpunkts (T1, T2, T3, ...) als ein Zielvorschlag oder als ein Ziel (Z1, Z2, Z3, ...) in dem Anwendergerät 120 des Nutzers 121 gehandhabt werde und/oder es können eine oder mehrere oben beschriebene Routen und/oder Merkmale der Routen vorgeschlagen und/oder angezeigt werden.

Beispielsweise können der Ausstiegszeitpunkt und/oder die Position (z.B. als eine erste Position und/oder zweite Position) beim Ausstieg des Nutzers aus dem Fahrzeug 100 und/oder beim Abstellen des Fahrzeugs 100 gespeichert werden. Dabei kann die seit dem Ausstieg vergangene Zeit und/oder die Position für eine Funktionalität im Zusammenhang mit einer Rückkehr des Nutzers 121 zum Fahrzeug 100 verwendet werden.

Beispielsweise kann die Position als ein (möglicher und/oder vorgeschlagener) Zielvorschlag für eine Rückkehr des Nutzers 121 (z.B. zu Fuß oder mit einem weiteren Verkehrsmittel, z.B. Skooter) zu dem Fahrzeug 100 gehandhabt werden. Alternativ oder zusätzlich können die seit dem Ausstieg des Nutzers 121 aus dem Fahrzeug 100 vergangene Zeit und/oder ein Parameter der Bewegung des Nutzers 121 seit dem Ausstieg zum Ermitteln der Route und/oder der ein oder mehreren Merkmale der Route zur Rückkehr des Nutzers 121 zu dem Fahrzeug 100 berücksichtigt werden.

Beispielsweise kann die Funktionalität ein (laufendes) Ermitteln, insbesondere Aktualisieren und/oder Anzeigen, der Zeit, der Distanz und/oder der Richtung, die zur Rückkehr zum Fahrzeug 100 erforderlich sind, umfassen.

Beispielsweise kann die Funktionalität eine Richtungsanzeige, insbesondere mit einem oder mehreren Merkmalen eines Kompasses, umfassen, wobei die Richtungsanzeige eine Richtung, insbesondere entlang der Luftlinie und/oder gemäß einer vorgeschlagenen Route für eine Rückkehr des Nutzers 121 zu dem Fahrzeug 100 und/oder zu dem Treffpunkt, umfasst. Beispielsweise kann diese Richtungsanzeige (auch) in einem gesperrten Bildschirm des Anwendergeräts 120 erscheinen und/oder eine schnelle Aktivierung der Funktionalität anbieten bzw. ermöglichen.

Die Ausführung eines oder mehrerer Schritte oder Zwischenschritte des Verfahrens 200 kann abhängig von:
- einem Nutzerkonto des Nutzers 121 des Fahrzeugs 100; und/oder
- den mit dem jeweiligen Nutzerkonto assoziierten Daten; und/oder
- abhängig von einer Aggregation der Daten mit den Nutzerkontodaten und/oder mit dem mit dem Nutzerkonto assoziierten Daten 115; erfolgen.

Beispielsweise kann das Verfahren 200 (z.B. ein oder mehrere im vorliegenden Dokument beschriebene Schritte bzw. Zwischenschritte des Verfahrens 200) abhängig von einer Mitgliedschaft (z.B. auch aufzufassen als: abhängig von einem Status und/oder von ein oder mehreren Optionen einer Mitgliedschaft), insbesondere von den mit dem Nutzer 121 assoziierten Daten, ausgeführt werden. Beispielsweise können die Nutzungsbedingungen, die Berechnung und/oder die Ausgabe von Vorteilen bzw. Zahlungen, Datenschutzbestimmungen und/oder Einstellungen, abhängig von der Mitgliedschaft, insbesondere von den mit dem Nutzer assoziierten Daten, ausgeführt werden.

Dabei können ein oder mehrere Schritte bzw. Zwischenschritte des Verfahrens 200, insbesondere die dabei anzuwendenden Parameter, Logik und/oder Einstellungen, abhängig von dem Nutzerkonto und/oder mit dem Nutzerkonto assoziierten Daten ausgeführt, insbesondere angepasst, werden.

Es kann sich bei einem Nutzerkonto um ein Nutzerkonto bei einem sozialen Netz (SN) und/oder bei einem Messenger-Dienst (MS) oder um ein mit dem Nutzerkonto bei einem sozialen Netz (SN) und/oder bei einem Messenger-Dienst (MS) verknüpftes Konto handelt.

Besonders bevorzugt kann, insbesondere im Rahmen der Nutzungsbedingungen, Zweckmäßigkeit und/oder Nutzereinstellungen, ein Einlesen und Berücksichtigen der Daten eines Nutzerkontos bzw. der mit dem Nutzerkonto assoziierter Daten, insbesondere ein Austausch der Daten, ausgeführt werden.

In einem Beispiel des Verfahrens 200 kann z.B. eine App des sozialen Netzes und/oder Messenger-Dienstes auf einen Bordcomputer des Fahrzeugs 100 installiert sein und/oder im Verfahren 200 verwendet werden.

Im Rahmen des Verfahrens 200 kann ein Server 110 zur Ausführung des Verfahrens 200 abhängig von einer Mitgliedschaft des Nutzers des Fahrzeugs 100 und/oder der Nutzer von ein oder mehreren weiteren Fahrzeugen, insbesondere abhängig von einer Mitgliedschaft in einem sozialen Netz (SM) und/oder Messenger-Dienst (MS), betrieben wird.

In diesem Dokument wird ferner ein System 150 und/oder eine Vorrichtung 100, 110, 120 zum Ausführen einer Funktionalität im Zusammenhang mit einer individuellen Mobilität beschreiben. Das System 150 kann eingerichtet sein, zum Ermitteln einer oder mehreren ersten Positionen des Fahrzeugs 100 und zum Ermitteln einer oder mehreren zweiten Positionen des Anwendergeräts 120 eines Nutzers 121 des Fahrzeugs 100. Das System 150 kann ferner eingerichtet sein, daraufhin abhängig von den ermittelten Informationen eine Funktionalität des Fahrzeugs 199 und/oder des Anwendergeräts 120 zu bestimmen oder anzupassen.

Des Weiteren wird in diesem Dokument ein Computerprogrammprodukt umfassend ein Computerprogramm und/oder Daten zum Ausführen des Computerprogramms beschrieben, wobei das Computerprogrammprodukt ausgebildet ist, bei seiner Ausführung auf zumindest einer Recheneinheit, einen oder mehrere Schritte des in diesem Dokument beschriebenen Verfahrens 200 auszuführen.

Durch die in diesem Dokument beschriebenen Maßnahmen kann bewirkt werden,
- eine Erhöhung des Komforts und/oder Nutzens in Zusammenhang mit der Verwendung eines Fahrzeugs 100, insbesondere außerhalb des Fahrbetriebs des Fahrzeugs 100. Die Vorteile entstehen dabei nicht notwendigerweise im Fahrzeug selbst;
- ein vorteilhafter Zusatz zu Fahrzeugfunktionalitäten;
- eine Erhöhung der Souveränität, Zufriedenheit bzw. der Sicherheit des Nutzers 121; und/oder
- eine Einsparung von Zeit, Energie bzw. weiteren Ressourcen.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Verfahren (200) zum Ausführen einer Funktionalität in Zusammenhang mit einer individuellen Mobilität; wobei das Verfahren (200) umfasst,
- Ermitteln (201) zumindest einer ersten Position eines Fahrzeugs (100);
- Ermitteln (202) zumindest einer zweiten Position eines Anwendergeräts (120) eines Nutzers (121) des Fahrzeugs (100); und
- Bestimmen und/oder Anpassen (203) einer Funktionalität des Fahrzeugs (100) und/oder des Anwendergeräts (120) in Abhängigkeit von der ersten Position und der zweiten Position.

2. Verfahren (200) gemäß Anspruch 1, wobei
- die erste Position derart ermittelt wird, dass an der ersten Position eine erste vorausbestimmte Bedingung zutrifft; und/oder
- die zweite Position derart ermittelt wird, dass an der zweiten Position eine zweite vorausbestimmte Bedingung zutrifft.

3. Verfahren (200) gemäß einem der vorhergehenden Ansprüche, wobei das Bestimmen und/oder Anpassen einer Funktionalität des Fahrzeugs (100) umfasst, insbesondere ist,
- Auswahl einer Funktionalität aus mehreren verschiedenen Funktionalitäten oder Auswahl einer Variante einer Funktionalität aus mehreren Varianten einer Funktionalität; und/oder
- Auswahl eines Betriebsmodus der Funktionalität; und/oder
- Variieren einer Logik, insbesondere einer Funktionslogik, der Funktionalität; und/oder
- Variieren einer Priorität und/oder einer Reihenfolge von mehreren Funktionalitäten oder von mehreren Merkmalen von einer oder mehreren Funktionalitäten; wobei das Variieren der Priorität und/oder der Reihenfolge insbesondere eine Anzeige von Information, ein Veranlassen eines Steuerungssignals, eine Veränderung und/oder eine Ausführung von ein oder mehreren Aktionen an dem Fahrzeug (100) und/oder an dem Anwendergerät (120) betrifft; und/oder
- Variieren eines oder mehrerer, insbesondere quantitativer, Parameter und/oder Einstellungen der Funktionalität.

4. Verfahren (200) gemäß einem der vorhergehenden Ansprüche, wobei das Verfahren (200) umfasst,
- Ermitteln eines Unterschieds zwischen der ersten Position des Fahrzeugs (100) und der zweiten Position des Anwendergeräts (120);
- Bestimmen oder Anpassen der Funktionalität des Fahrzeugs (100) und/oder des Anwendergeräts (120) in Abhängigkeit von dem ermittelten Unterschied; wobei der Unterschied insbesondere kennzeichnend ist, für:
- eine relative Position betreffend das Fahrzeug (100) und das Anwendergerät (120);
- eine Distanz zwischen dem Fahrzeug (100) und dem Anwendergerät (120);
- eine erste Länge und/oder ein erstes Merkmal einer ersten Route, insbesondere auf einer Fahrzeugstraße und/oder für ein Fahren in dem Fahrzeug (100); und/oder
- eine zweite Länge und/oder ein zweites Merkmal einer zweiten Route, insbesondere auf einer Fußgängerstraße und/oder für eine Bewegung des Nutzers (121) als Fußgänger oder mit einem von dem Fahrzeug (100) abweichenden Verkehrsmittel.

5. Verfahren (200) gemäß einem der vorhergehenden Ansprüche; wobei die Funktionalität des Fahrzeugs (100) und/oder des Anwendergeräts (120) betrifft,
- eine Bewegung des Nutzers (121) zu dem Fahrzeug (100) als Fußgänger und/oder mit einem weiteren Verkehrsmittel; und/oder
- eine Bewegung des Fahrzeugs (100), insbesondere in einem zumindest teilweise automatisierten und/oder zumindest teilweise ferngesteuerten Fahrmodus, zu dem Nutzer (121); und/oder
- eine Bewegung des Nutzers (121) und eine Bewegung des Fahrzeugs (100) zu einem gemeinsamen Treffpunkt (T1, T2, T3).

6. Verfahren (200) gemäß Anspruch 5, wobei das Verfahren (200) umfasst, Ermitteln, insbesondere Anpassen, des Treffpunkts (T1, T2, T3) in Abhängigkeit von einem Ziel (Z1, Z2, Z3), welches nachfolgend zu dem Treffpunkt (T1, T2, T3) von dem Nutzer (121) mit dem Fahrzeug (100) erreicht werden soll.

7. Verfahren (200) gemäß Anspruch 6, wobei das Verfahren (200) umfasst,
- Ermitteln, insbesondere Erfassen über eine Benutzerschnittstelle, von Ziel-Information in Bezug auf das Ziel (Z1, Z2, Z3); wobei die Ziel-Information das Ziel (Z1, Z2, Z3), insbesondere im Wesentlichen nur, gemäß ein oder mehrerer Merkmale des Ziels (Z1, Z2, Z3) und/oder abstrahiert von einer bestimmten Position, von einem bestimmten Fahrtziel und/oder von einem bestimmten Ende einer Route und/oder von einer konkreten Einrichtung beschreibt; und
- Ermitteln, insbesondere Anpassen, des Treffpunkts (T1, T2, T3) auf Basis der Ziel-Information.

8. Verfahren (200) gemäß einem der vorhergehenden Ansprüche, wobei die Funktionalität zumindest zwei Ziele (Z1, Z2, Z3) berücksichtigt; wobei
- ein oder mehrere der zumindest zwei Ziele (Z1, Z2, Z3) ein Fahrtziel für das Fahrzeugs (100) umfassen; und/oder
- ein oder mehrere der zumindest zwei Ziele (Z1, Z2, Z3) ein von einer bestimmten Position, von einem bestimmten Fahrtziel und/oder von einem bestimmten Ende einer Route und/oder von einer konkreten Einrichtung abstrahiertes Ziel (Z1, Z2, Z3) umfassen.

9. Verfahren (200) gemäß einem der vorhergehenden Ansprüche, wobei das Bestimmen und/oder Anpassen (203) der Funktionalität des Fahrzeugs (100) und/oder des Anwendergeräts (120) ein Bestimmen und/oder Anpassen eines möglichen Treffpunkts (T1, T2, T3) zwischen dem Fahrzeug (100) und dem Nutzer (121) umfasst; wobei der Treffpunkt (T1, T2, T3) auf Basis von ein oder mehreren Kriterien bestimmt und/oder angepasst wird, insbesondere:
- eine verringerte, insbesondere optimierte, Zeit bis zu einem Treffen, insbesondere bis zu einer Einstiegsmöglichkeit des Nutzers (121) in das Fahrzeug (100); und/oder
- eine verringerte, insbesondere optimierte, Zeit zum Erreichen eines weiteren Ziels (Z1, Z2, Z3) nach dem Einstieg des Nutzers (121) in das Fahrzeug (100) oder ohne Nutzung des Fahrzeugs (100); und/oder
- eine Möglichkeit zum Anhalten des Fahrzeugs (100) und/oder zum Einsteigen in das Fahrzeug (100); und/oder
- eine verringerte Laufstrecke für den Nutzer (121); und/oder
- verringerte Kosten, insbesondere Energiekosten und/oder Fahrpreiskosten und/oder Mietkosten für ein weiteres Verkehrsmittel; und/oder
- ein verringerter, insbesondere gesamter, Energieverbrauch; und/oder
- eine verbesserte ökologische Bilanz, insbesondere bis zu dem Treffpunkt (T1, T2, T3) und/oder bis zu einem weiteren Ziel (Z1, Z2, Z3).

10. Verfahren (200) gemäß einem der vorhergehenden Ansprüche, wobei das Verfahren (200) umfasst, Verwenden der ersten Position des Fahrzeugs (100) und/oder eines, insbesondere ein oder mehreren eingestellten Kriterien entsprechenden, Treffpunkts (T1, T2, T3) mit dem Fahrzeug (100) als ein Zielvorschlag oder ein Ziel (Z1, Z2, Z3) in dem Anwendergerät (120) des Nutzers (120), insbesondere in Zusammenhang mit einer Routenplanung.

11. Verfahren (200) gemäß einem der vorhergehenden Ansprüche, wobei das Bestimmen und/oder Anpassen (203) der Funktionalität erfolgt, abhängig von:
- einem Nutzerkonto des Nutzers (121) des Fahrzeugs (100); und/oder
- mit dem Nutzerkonto assoziierten Daten; und/oder
- einer Verarbeitung, insbesondere einer Aggregation, von Daten mit dem Nutzerkonto und/oder mit dem mit dem Nutzerkonto assoziierten Daten.

12. Verfahren (200) gemäß einem der vorhergehenden Ansprüche, wobei das Bestimmen und/oder Anpassen (203) der Funktionalität erfolgt, abhängig von einer Mitgliedschaft des Nutzers des Fahrzeugs (100), insbesondere von einer Mitgliedschaft in einem sozialen Netz (SM) und/oder in einem Messenger-Dienst (MS).

13. System (100, 110, 120) zum Ausführen einer Funktionalität in Zusammenhang mit einer individuellen Mobilität; wobei das System (100, 110, 120) eingerichtet ist,
- zumindest eine erste Position eines Fahrzeugs (100) zu ermitteln;
- zumindest eine zweite Position eines Anwendergeräts (120) eines Nutzers (121) des Fahrzeugs (100) zu ermitteln; und
- eine Funktionalität des Fahrzeugs (100) und/oder des Anwendergeräts (120) in Abhängigkeit von der ersten Position und der zweiten Position zu bestimmen und/oder anzupassen.

14. Computerprogrammprodukt umfassend ein Computerprogramm und/oder Daten zum Ausführen des Computerprogramms, wobei das Computerprogrammprodukt ausgebildet ist, bei seiner Ausführung auf zumindest einer Recheneinheit, einen oder mehrere Schritte des Verfahrens (200) nach einem oder mehreren der Ansprüche 1 bis 12 auszuführen.
